# EUROPÄISCHE PATENTANMELDUNG

(11) **EP 3 808 220 A1**
(43) Veröffentlichungstag der Anmeldung: **21.04.2021**
(21) Anmeldenummer: 20200718.3
(22) Anmeldetag: 08.10.2020
(51) Int. Cl.: A47C 5/00, A47C 4/04, A47B 96/20, B29C 53/06, B29C 51/08

(54) **MÖBEL AUS EINEM FASERVERBUNDWERKSTOFF**

(30) Priorität: 17.10.2019 DE 102019128083
(71) Anmelder: Klöber GmbH, 88696 Owingen (DE)
(72) Erfinder: THOMAS, Konstantin Albert, 79725 Laufenburg (DE); LIEBSCH, Ronald, 88239 Primisweiler (DE)
(74) Vertreter: Riebling, Peter

(57) **Zusammenfassung**

Möbel (28) aus einem Faserverbundwerkstoff, welcher zu einem Formteil (1) gepresst ist, wobei mindestens eine Teilmenge des Fasergutes des Faserverbundwerkstoff aus Kunststoff ausgebildet ist, und wobei das Formteil (1) mindestens eine Kerbe (7, 7a, 7b, 7c, 7d, 17) aufweist, wobei durch die mindestens eine Kerbe (7, 7a, 7b, 7c, 7d, 17) ein Scharnier gebildet ist, das mindestens zwei Formteile (1) schwenkbar miteinander verbindet, und dass die Formteile (1) im verschwenkten Zustand sich gegenseitig abstützen und zu einem in sich geschlossenen Möbel (28) zusammenfügbar sind.

## Beschreibung

Gegenstand der Erfindung ist ein Möbel aus einem Faserverbundwerkstoff nach dem Oberbegriff des Patentanspruches 1.

Ein Faserverbundwerkstoff umfasst ein Fasermaterial mit einer konturbestimmenden Festigkeit sowie ein Bindemittel. Als Fasern werden beispielsweise synthetische Fasern (PES, PET, PLA) und/oder natürliche Fasern (z. B. Kokosfasern) verwendet. Als Bindemittel wird ein Bindemittel verwendet, welches bei einer Temperatur kleiner als 120°C aushärtbar ist. Dabei handelt es sich beispielsweise um ein Bindemittel auf Polyurethanbasis oder auf Chloroprenbasis.

Ein derartiger Faserverbundwerkstoff liegt beispielsweise als ein Filz vor, d.h. ein dichtes textiles Erzeugnis aus wirren und unregelmäßig verschlungenen Fasern, gleichbedeutend einem Vlies. Es stellt damit ein Flächengebilde aus ungeordnetem Fasergut dar.

Die DE 30 07 343 A1 zeigt ein Verfahren zur Herstellung von Formteilen aus Faservlies, wobei mindestens eine Teilmenge des Fasergutes selbst aus Fasern aus zumindest mantelseitig bindungswirksam schmelzbarem Werkstoff besteht und die Vlies-Teilstücke in der Hitze formgepresst werden, wobei die Wärmebehandlung dazu führt, dass der Bindungsprozess und der Formungsprozess gleichzeitig ablaufen.

Über eine Presse, welche eine Matrize und eine Patrize aufweist, wird das Formvlies in die gewünschte Form gebracht und es besteht die Möglichkeit, das Formvlies mit Quereinschnitten zu versehen, um das auf diese Weise realisierte raumseitige Flächenelement beweglich zu gestalten.
Daneben können Verfestigungseffekte im Formteil dadurch erreicht werden, dass die Matrize und/oder die Patrize der Pressform mit stegartigen Erhöhungen oder Wölbungen versehen sind. Es lassen sich damit strukturgebende Vertiefungen oder Sicken erzeugen, die eine hohe Formhaltigkeit bei großflächigen Formteilen mit sich bringen.

Derartige Formkörper sind beispielsweise als Möbelstrukturelement bekannt, worunter flächige Hauptbestandteile von Möbeln bezeichnet werden, die wenigstens ein raumseitiges Flächenelement aufweisen, bzw. als solches ausgebildet sind. Hierbei handelt es sich beispielsweise um Seitenwände oder Rückwände von Schränken, Kopfplatte eines Möbelschrankes oder eine Tischplatte eines Tisches.

Ein solches Möbelstrukturelement wird beispielsweise mit der EP 3 241 462 B1 gezeigt, wobei zumindest ein raumseitiges Flächenelement ganz oder teilweise aus überwiegend glattflächiges Formvlies aus Kunststoff ausgebildet ist. Dabei ist das Formvlies aus einem Faserverbundwerkstoff hergestellt, der aus Kunststofffasern besteht, die mechanisch und/ oder chemisch und/oder thermisch sowie bindemittelfrei miteinander verbunden sind, wobei das Formvlies ein spezifisches Gewicht von weniger als 0,6g/cm³ aufweist.

Dieses Formvlies lässt sich mit eingebrachten Schnitten ausrüsten, wodurch ein flexibler bogenförmiger Verlauf des Flächenelements realisiert werden kann. Dazu werden Schnitte quer zur Längserstreckung des Formvlieses in dieses eingebracht, die zwischen 80-95% der Materialstärke des Formvlieses betragen.

Nachteilig daran ist jedoch, dass die Schnitte die Widerstandfähigkeit des Materials reduzieren und die Gefahr besteht, dass durch ein mehrmaliges Verschwenken, der durch den Schnitt getrennten Flächen gegeneinander, das Flächenelement bricht oder sich die Fasern lösen können, da auf ein Bindemittel verzichtet wurde.

Insbesondere Scherung und verstärkte Belastung der verbleibenden Stege zwischen den Flächen führen zu Bruch bzw. Rissbildung, so dass ein vollständiges Möbel mit diesen Möbelstrukturelementen nicht gebaut werden kann.

Der Erfindung liegt die Aufgabe zugrunde ein Möbel- oder Strukturelement der eingangs genannten Art so weiter zu bilden, dass unter Berücksichtig einer flexiblen Flächengestaltung ein zugleich einfach aufzubauender und leichtgewichtiger Formkörper zur Verfügung steht.

Die Aufgabe wird erfindungsgemäß durch die Merkmale des unabhängigen Patentanspruches gelöst, während vorteilhafte Ausgestaltungen und Weiterbildungen der Erfindung den Unteransprüchen entnommen werden können.

Zur Lösung der Aufgabe ist die Erfindung dadurch gekennzeichnet, dass das Formteil, welches aus einem Faserverbundwerkstoff gepresst ist, mindestens eine Kerbe aufweist, die ein Scharnier bildet, welches mindestens zwei Formteile schwenkbar miteinander verbindet, und dass sich diese Formteile im verschwenkten Zustand gegenseitig abstützen und zu einem in sich geschlossenen Möbel zusammenfügbar sind.

Der Faserverbundwerkstoff besteht hierbei teilweise aus Fasern aus wenigstens mantelseitig bindungswirksam schmelzbarem Werkstoff.

Das Formteil ist durch Wärmebehandlung und Formpressen hergestellt, wobei während des Formpressens eine Matrize und/ oder eine Patrize, zur Erzeugung der mindestens einen Kerbe in dem Formteil, mit stegartigen Erhöhungen versehen ist.
Durch die Kerbe wird ein Scharnier zwischen mindestens zwei miteinander verbundenen Formteilen geschaffen, die nur noch über einen Falz miteinander verbunden sind.

Durch die über Scharniere miteinander verbundenen Formteile wird ein Bausatz für die Herstellung eines Möbels geschaffen, das flach zusammengefaltet werden kann und bei Bedarf an einem Aufstellungsort auseinander geklappt und aufgestellt werden kann.

Die vorliegende Erfindung beansprucht allgemein ein multifunktionales Ausstattungsteil, welches aus einem Faserverbundwerkstoff geformt ist, wobei als Faserverbundwerkstoff stochastisch orientierte Fasern mit einem Bindemittel verbunden und zu einem Formteil geformt sind und anschließend zumindest partiell verdichtet, beispielsweise kalt oder warm verpresst sind und ein über Kerbe und Falz gebildetes Scharnier aufweisen.

In einer möglichen Ausführungsform ist das Formteil kalt verpresst. Alternativ kann das Formteil warm verpresst sein. Eine kalte oder warme Verpressung des Fasermaterials zu dem Formteil ist gegenüber herkömmlichen Spritzgussverfahren und spritzgegossenen Formteilen deutlich kostengünstiger, da insbesondere die Pressformwerkzeuge deutlich einfacher aufgebaut sind.

Eine derartige Durchwärmung kann beispielsweise im Größenbereich von 200° über einen Zeitraum von 15 Minuten liegen. Mit einer derartigen Behandlung können Filze mit einer Dicke von 4 bis 50 mm behandelt werden.

Durch die Pressung mit Matrize und/ oder Patrize wird das Material verdichtet und im Bereich der Kerbe verdrängt, wobei die Kerbwände so wie auch der Steg ein besonders komprimiertes Material aufweisen, in dem Bereich, wo durch die Stege das Material besonders komprimiert wird.

Durch die partielle Verdichtung und Umformung des mit Bindemittel versehenen Faserverbundwerkstoffs, insbesondere durch Pressdruck, ist ein unkontrolliertes Fließen und Binden des Bindemittels sicher verhindert. Dabei ist das Formteil insbesondere in einem solchen Bereich und somit partiell dort verdichtet, insbesondere verpresst, an welchem die Kerbe über die Matrize bzw. Patrize in dem Formteil eingebracht ist.

Durch die Kerbe wird ein Scharnier geschaffen, das einteilig mit den beiden zu verbindenden Formteilen ausgebildet ist. Solche Scharniere bestehen im Wesentlichen aus einer dünnwandigen Verbindung in Form eines Falzes, der durch seine Biegsamkeit eine Drehung der verbundenen Teile ermöglicht. Die so hergestellten Scharniere gehen in der Regel mit Wanddickensprüngen einher, erhalten aber für den Schmelzfluss und die Spannungsverteilung sanfte Übergänge.

Rein technisch können die Scharniere den Festkörpergelenken zugeordnet werden. Das Festkörpergelenk ist kein "echtes" Gelenk im Sinne eines kinematischen Paares, sondern beruht auf dem Prinzip der Elastostatik (Elastizität). Die Funktion eines Gelenks wird durch einen Bereich verminderter Biegesteifigkeit relativ zu zwei angrenzenden Bereichen höherer Biegesteifigkeit erreicht. Die verminderte Biegesteifigkeit wird hier durch lokale Querschnittsverringerung erzeugt.

Mit der vorliegenden Erfindung wird ebenfalls die Herstellung einer Sichtschutzblende an (Schreib-)tischecken beansprucht, welche sich aus einer Mehrzahl von flächigen Platten zusammensetzen lässt. Als Bindeglied soll ein plattenförmiges Element zum Tragen kommen, dass unterschiedliche, aber klar definierte Radien ermöglicht. (90° Außenradius bündig zur Außenkante Tisch ergibt Radius a; Innenseite Radius bündig zur Außenseite Tisch ergibt Radius b; Offset Innenseite Radius zur Außenseite Tisch ergibt Radius c).

Die Biegsamkeit erfordert hier deutlich weniger Dauerfestigkeit und somit können auch gegenteilige "Scharniere" Anwendung finden. Sprich die Kerben können entsprechend negiert werden und damit unverdichtete Bereiche zu schaffen, die sich in der Biegesteifigkeit ebenfalls deutlich von den angrenzenden Bereichen unterscheiden.

Als Faserverbundwerkstoff werden sogenannte technische Filze beansprucht, wobei einzelne Fasern sich einen in einem Gewirk durchdringen. Möglich ist auch die Verwendung von Vließen, wobei sich die Fasern in der Herstellung nicht, bzw. nicht gesteuert durchdringen.

Weitere Merkmale der Erfindung sind, dass die Möbel mit den Scharnieren flexibel und belastbar sind, denn sie werden oft für mehrere Veranstaltungen eingesetzt und sollten daher den Auf- und Abbau sowie auch den Transport möglichst lange unbeschadet überstehen. Zudem sind sie leicht zu verschwenken und die Formteile können sich gegenseitig abstützen.

Außerdem besteht der Vorteil, dass die zusammenbaubaren Möbel aus dem Faserverbundwerkstoff platzsparend untergebracht werden können und die Transportkosten so möglichst gering gehalten werden können.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Neuerung anhand von mehrere Ausführungswege darstellenden Zeichnungen näher erläutert. Hierbei gehen aus den Zeichnungen und ihrer Beschreibung weitere erfindungswesentliche Merkmale und Vorteile der Neuerung hervor.

Soweit einzelne Gegenstände als "erfindungswesentlich" oder "wichtig" bezeichnet sind, bedeutet dies nicht, dass diese Gegenstände notwendigerweise den Gegenstand eines unabhängigen Anspruches bilden müssen. Dies wird allein durch die jeweils geltende Fassung des unabhängigen Patentanspruches bestimmt.

Es zeigen:
- Figur 1:: Einen ungepressten Formkörper
- Figur 2:: Einen gepressten Formkörper zwischen einer Matrize und einer Patrize
- Figur 3:: Eine weitere Ausführungsform einer Matrize
- Figur 4:: Zwei Körper welche über ein Scharnier verbunden sind
- Figur 5:: Ein Möbel im Grundzustand
- Figur 6:: Ein Möbel im gefalteten Zustand
- Figur 7:: Ein Hocker im gefalteten Zustand

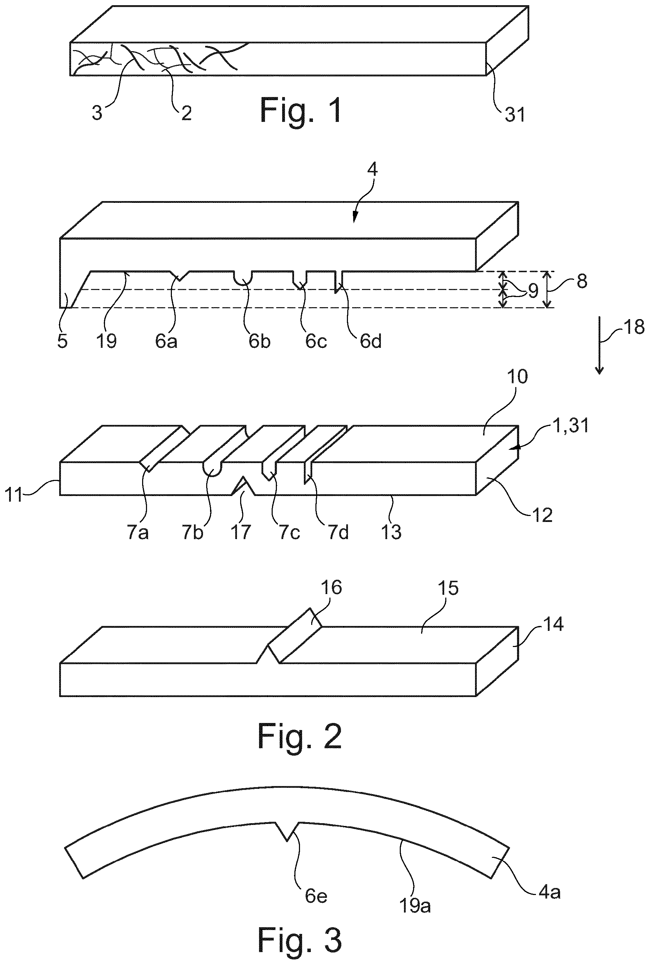

Die Figur 1 zeigt ein Formteil 1 aus einem Faserverbundwerkstoff, welches aus den Fasern 2 und 3 besteht. Faser 2 ist hierbei eine einfache und unbehandelte PET-Faser, welche in einem Extrusionsverfahren hergestellt ist, wobei die Faser 3 ebenfalls in einem Extrusionsverfahren hergestellt wurde, jedoch zusätzlich mit einem Bindemittel ummantelt wird. Diese Fasern sind in einem Gewirk zusammengenadelt und bilden eine Rohfilzplatte 31, welche den Grundkörper für das Formteil der Erfindung darstellt.

Figur 2 zeigt die Behandlung dieser Rohfilzplatte 31, wobei eine Matrize 4 in Pfeilrichtung 18 auf die Rohfilzplatte 31 gedrückt wird und diese somit presst und verdichtet.
Die Matrize 4 weist die stegartigen Erhöhungen (im Folgenden als Steg bezeichnet) 6a, 6b, 6c, 6d auf sowie die seitlich angeordnete Klinge 5. Wird nun die Matrize 4 in Pfeilrichtung 18 auf die Rohfilzplatte 31 bewegt, kommt zunächst die Klinge 5 in Kontakt mit der Seitenfläche 11 der Rohfilzplatte 31 und schneidet an dieser Stelle die Rohfilzplatte 31 zu und definiert somit die Außengeometrie des späteren Formteils. Hierzu ragt die Klinge 5 im Abstand 8 von der Unterseite 19 der Matrize 4 hervor. Dabei ist dieser Abstand 8 auf jeden Fall größer als die Dicke der Filzplatte 1. Zusätzlich befindet sich an der Unterseite 19 der Matrize 4 die Stege 6a, 6b, 6c und 6d, wobei diese hier beispielhaft aufgeführt sind und jeweils eine unterschiedliche Geometrie aufweisen. So weist der Steg 6a eine im Schnitt dreieckige Geometrie auf, der Steg 6b eine runde Geometrie, der Steg 6c eine gerade und anschließend spitz auslaufende Geometrie auf, und der Steg 6d ist als schmale Klinge ausgebildet, welches bei dem Stanzvorgang mit der Rohfilzplatte 31 bzw. dem daraus gebildeten Formteil 1 in Kontakt kommt.

In Figur 2 ist mittig die behandelte Rohfilzplatte zu sehen, welche nun als gepresstes Formteil 1 vorliegt. Das hat der Steg 6a die Kerbe 7a, der Steg 6b die Kerbe 7b, der Steg 6c die Kerbe 7c und der Steg 6d die Kerbe 7d in den Filzstoff eingebracht. Vor der Behandlung der Rohfilzplatte 31 wird diese in einem Ofen mit Wärme behandelt, so dass das ummantelte Bindemittel der Faser 3 aktiviert wird. Bei der Behandlung der Rohfilzplatte 31 kann optional die Matrize und/ oder Patrize 4 bzw. 14 gekühlt werden, dies hängt jedoch davon ab, wie viele Arbeitsschritte mit warmen Rohfilzplatten durchgeführt werden.

Optional ist in Figur 2 auch eine Patrize 14 zu sehen, welche auf ihrer Oberseite 15 ebenfalls über einen Steg 16 verfügt, mit dem eine Einbringung einer Kerbe 17 in die Unterseite des Formteils möglich ist.

Figur 3 zeigt eine weitere Ausführungsform einer Matrize 4a, welche eine gebogene Kontaktfläche 19a aufweist und aufgrund dieser Kontaktfläche 19a ist es möglich, das Formteil 1 zu verformen. Derartige Formen könnte beispielsweise eine runde Form sein, eine leicht gewölbte Form oder in einem Sonderfall der Ergonomie des menschlichen Körpers angepasst werden. Zusätzlich ist nach dem Beispiel der Figur 3 an der Kontaktfläche 19 der Matrize 4a den Steg 6e angebracht, welches dazu dient, eine Kerbe in das Formteil einzubringen.

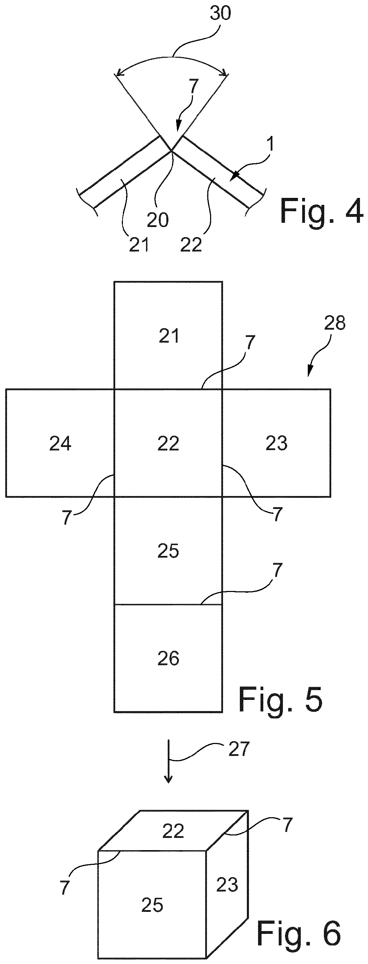

Durch die Anbringung der Kerbe ist in Figur 4 zu sehen, wie das Formteil 1 nun in zwei Flächen 21, 22 unterteilt ist, wobei die Kerbe 7 sich zwischen diesen beiden Flächen 2, 22 befindet, jedoch immer noch ein Falz 20 zwischen der Fläche 21 und 22 vorhanden ist. Durch das Verbleiben dieses Falzes und die eingebrachte Kerbe ist es nun möglich, die Flächen 21 und 22 um den Kerbwinkel 30 zu verbiegen, wobei hierbei der Falz 20 und die Kerbe 7 eine Scharnierwirkung haben. Der Kerbwinkel 30 beträgt in der bevorzugten Ausführungsform ein bis maximal 180°. Je nach Formgebung der Stege 6a-e und 16 können auch Kerbwinkel 30 größer als 180° verwirklicht werden, wobei jedoch stets die Scharnierwirkung zwischen den beiden Flächen 21 und 22 gewährleistet sein muss.

Dieses erfindungsgemäße Verfahren wird dazu verwendet, einen Grundkörper zu schaffen, welcher in Figur 5 mit dem Bezugszeichen 28 zu sehen ist. Dieser Grundkörper 28 besteht aus den Flächen 21 bis 26, die aus den miteinander verbundenen Formteilen bestehen. Diese weisen an ihren Kontaktstellen jeweils eine Kerbe 7 auf, wobei die einzelnen welche Flächen jeweils über einen Steg miteinander verbunden sind. Durch die Anbringung derartiger Kerben 7 ist es nun möglich, die einzelnen Flächen 21 bis 26 gegeneinander zu verschwenken, um ein in Figur 6 sichtbares Möbel zu schaffen, welches in sich geschlossen werden kann. Hierzu werden die einzelnen Flächen 21-26 so gefaltet, dass ein kubisches Möbel geschaffen wird, wobei dieses durch die erfindungsgemäßen Kerben und Falzen gebildete Scharniere in Pfeilrichtung 27 belastet werden kann. So kann beispielsweise ein Sitzmöbel geschaffen werden, wobei sich der Benutzer in Pfeilrichtung 27 auf dieses Möbel setzen kann, und aufgrund der erfindungsgemäßen Kerben und der erfindungsgemäßen Formteile Filzplatte ist es möglich, diesen Körper zu belasten und das Gewicht eines Benutzers zu tragen.

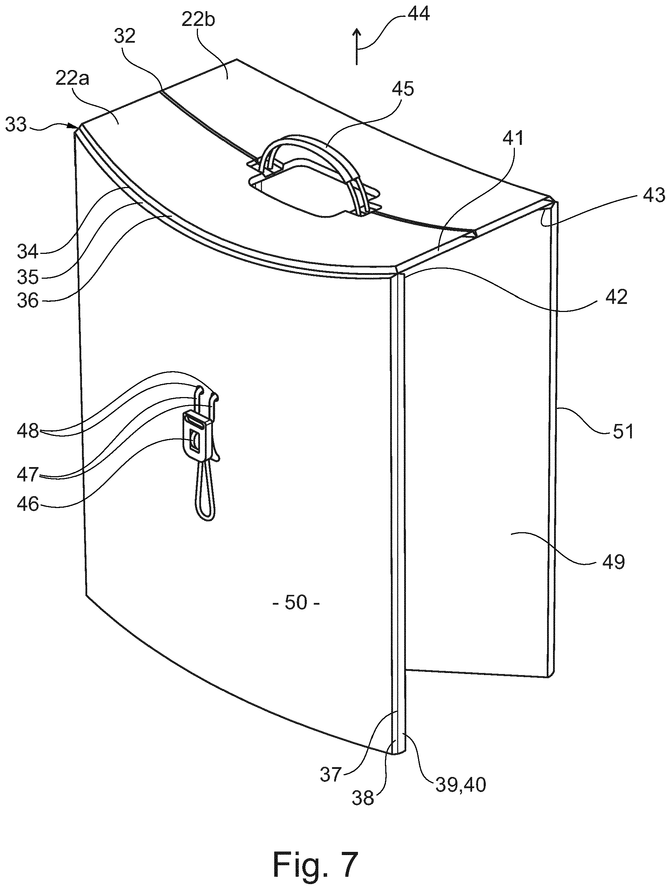

Figur 7 zeigt eine spezifische Ausführungsform eines solchen Möbels, welches als zusammenklappbarer Hocker ausgebildet ist. Der Hocker wird gebildet von einer Sitzfläche, welche aus den beiden Flächen 22a und 22b besteht. Zwischen den Flächen 22a und 22b befindet sich die Kerbe 32, welche im zusammengebauten Zustand des Hockers geschlossen ist, wobei die Seitenflächen der Flächen 22a und 22b bündig aneinander anliegen. Durch dieses Anliegen und dem unterhalb der Kerbe 32 befindlichen Falz (nicht gezeigt) ist es möglich eine stabile Sitzfläche zu schaffen.

Zwischen der Fläche 22a und der sich senkrecht daran anschließenden Fläche 50, mit der der Hocker auf dem Boden aufsteht, befindet sich die Kerbe 33. Die Kerbe 33 weist den Falz 34 auf, welcher die Flächen 22a und 50 miteinander verbindet. Neben dieser Verbindung ist die Fläche 50 über den vertikalen Falz 37 mit einer nicht gezeigten Fläche 40 verbunden. Die Fläche 40 ragt in das Innere des Hockers und bildet mit der Fläche 49 die v-förmige Seitenfläche des Hockers. Eine gleichartige Seitenfläche ist auch auf der gegenüberliegenden Seite angeordnet, wobei diese Seitenflächen über die leicht konvex gebogenen Flächen 50 und 51 miteinander verbunden sind.

Gemäß Figur 7 erkennt man den Falz 37 zwischen der Seitenfläche 38 der Fläche 50 und der Seitenfläche 39 der Fläche 40. Die Fläche 40 besitzt oberhalb davon, d.h. unterhalb der Fläche 22 eine Auflagefläche 42, auf die die Unterseite der Fläche 22, im zusammengefalteten Zustand des Hockers, zum Aufliegen kommt. Ebenso weist die Fläche 49 eine gleichartige Auflagefläche 43 auf, auf die die Unterseite der Fläche 22 ebenfalls zum Aufliegen kommt.

Die Fläche 22 verfügt im Bereich der Kerbe 32 über einen Griff 45 der in Pfeilrichtung 44 gezogen werden kann. Wird er gezogen, dann klappen die Flächen 22a und 22b bedingt durch die Kerbe 32 nach unten auseinander. Auch werden die Seitenflächen 36 und 35 einander angenähert, bis die Flächen 22 und 50 annähernd fluchtend ausgerichtete sind. Der Winkel zwischen den Flächen 40 und 49 verringert sich, bis beide Flächen aufeinander zum Anliegen kommen. In diesen Endpositionen ist der Hocker vollständig zusammengeklappt und kann bequem transportiert werden und aufgrund der nun eingenommen geringen Abmessung leicht verstaut werden.

Um ein Auseinanderklappen des Hockers zu verhindern, kann ein Verschluss an der Außenseite der Fläche 50 betätigt werden. Über den Verschluss werden zwei Seilzüge 47 bedient, die über die Löcher 48 in das Innere des Hockers geführt sind und dort mit den einzelnen zueinander beweglichen Flächen in Kontakt sind und eine Bewegung der Flächen zueinander verhindern.

Weiterer Vorteil dieses Möbelstückes besteht darin, dass dieses jederzeit wieder auseinandergebaut werden kann und an einen anderen Einsatzort transportiert werden kann.

Die vorliegende Erfindung ist jedoch nicht auf ein derartiges einfaches konisches Möbelstück beschränkt, es können auch weitere Ausführungsformen wie Freiformflächen, Kugeln, Halbschalen, Trapeze, Prismen und andere Formgebungen geschaffen werden.

### Zeichnungslegende

- 1: Formteil
- 2: Faser
- 3: Faser
- 4: Stanzwerkzeug a
- 5: Klinge
- 6: Steg a, b, c, d, e
- 7: Kerbe a, b, c, d
- 8: Abstand
- 9: Abstand
- 10: Oberseite
- 11: Seitenfläche
- 12: Seitenfläche
- 13: Unterseite
- 14: Gegenwerkzeug
- 15: Oberseite
- 16: Steg
- 17: Kerbe
- 18: Pfleilrichtung
- 19: Kontaktfläche
- 20: Falz
- 21: Fläche
- 22: Fläche
- 23: Fläche
- 24: Fläche
- 25: Fläche
- 26: Fläche
- 27: Pfeilrichtung
- 28: Grundkörper
- 29: Möbel
- 30: Kerbwinkel
- 31: Rohfilzplatte
- 32: Kerbe
- 33: Kerbe
- 34: Falz
- 35: Seitenfläche
- 36: Seitenfläche
- 37: Falz
- 38: Seitenfläche
- 39: Seitenfläche
- 40: Fläche
- 41: Seitenfläche (von 22a,b)
- 42: Auflagefläche (von 40)
- 43: Auflagefläche (von 49)
- 44: Pfeilrichtung
- 45: Griff
- 46: Verschluss
- 47: Seilzug
- 48: Loch
- 49: Fläche
- 50: Fläche
- 51: Fläche

## Patentansprüche

1. Möbel (28) aus einem Faserverbundwerkstoff, welcher zu einem Formteil (1) gepresst ist, wobei mindestens eine Teilmenge des Fasergutes des Faserverbundwerkstoff aus Kunststoff ausgebildet ist, und wobei das Formteil (1) mindestens eine Kerbe (7, 7a, 7b, 7c, 7d, 17) aufweist, **dadurch gekennzeichnet, dass** durch die mindestens eine Kerbe (7, 7a, 7b, 7c, 7d, 17) ein Scharnier gebildet ist, das mindestens zwei Formteile (1) schwenkbar miteinander verbindet, und dass die Formteile (1) im verschwenkten Zustand sich gegenseitig abstützen und zu einem in sich geschlossenen Möbel (28) zusammenfügbar sind.

2. Möbel (28) nach Anspruch 1, **dadurch gekennzeichnet, dass** der Faserverbundwerkstoff aus Fasern aus wenigstens mantelseitig bindungswirksam schmelzbarem Werkstoff besteht.

3. Möbel (28) nach Anspruch 1 oder 2, **dadurch gekennzeichnet, dass** das Formteil (1) durch Wärmebehandlung und Formpressen hergestellt ist, wobei während des Formpressen eine Matrize (4, 4a) und/ oder eine Patrize (14), zur Erzeugung der mindestens einen Kerbe (7, 7a, 7b, 7c, 7d, 17) in dem Formteil (1), mit stegartigen Erhöhungen (6, 6a, 6b, 6c, 6d, 16) versehen ist,
